(19) Europäisches Patentamt
European Patent Office
Office européen des brevets

(11) **EP 0 815 065 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(21) Anmeldenummer: **96908033.2**

(22) Anmeldetag: **14.03.1996**

(51) Int Cl.⁶: **C04B 16/08**, C04B 18/20, C04B 28/02
// (C04B28/02, 18:20, 22:06, 40:06)

(86) Internationale Anmeldenummer:
**PCT/EP96/01084**

(87) Internationale Veröffentlichungsnummer:
**WO 96/30315 (03.10.1996 Gazette 1996/44)**

(54) **ISOLATIONSMÖRTEL**

INSULATING MORTAR

MORTIER ISOLANT

(84) Benannte Vertragsstaaten:
**AT BE CH DE DK ES FI FR GB GR IE IT LI NL PT SE**

(30) Priorität: **24.03.1995 BE 9500266**

(43) Veröffentlichungstag der Anmeldung:
**07.01.1998 Patentblatt 1998/02**

(73) Patentinhaber: **Blocken, Wilfried**
**3730 Hoeselt (BE)**

(72) Erfinder: **Blocken, Wilfried**
**3730 Hoeselt (BE)**

(74) Vertreter: **Bauer, Wulf, Dr.**
**Bayenthalgürtel 15**
**50968 Köln (Marienburg) (DE)**

(56) Entgegenhaltungen:
DE-A- 2 412 919   DE-A- 2 449 385
DE-A- 3 517 005   DE-U- 9 111 840
DE-U-29 504 355   GB-A- 1 118 621

- CHEMICAL ABSTRACTS, vol. 104, no. 6, 10.Februar 1986 Columbus, Ohio, US; abstract no. 38842e, XP000061314 & JP,A,60 131 879 (UBE INDUSTRIES LTD) 13.Juli 1985
- CHEMICAL ABSTRACTS, vol. 118, no. 4, 25.Januar 1993 Columbus, Ohio, US; abstract no. 26639v, XP000353049 & JP,A,04 280 849 (M.TOYOIZUMI) 6.Oktober 1992
- CHEMICAL ABSTRACTS, vol. 116, no. 26, 29.Juni 1992 Columbus, Ohio, US; abstract no. 261179n, Y.K.DREVAL ET AL: "Utilization of polyurethane foam wastes" XP000401566 & KHOLOD. TEKH., Nr. 7, Seite 31
- CHEMICAL ABSTRACTS, vol. 104, no. 18, 5.Mai 1986 Columbus, Ohio, US; abstract no. 154682b, XP000183821 & JP,A,60 226 441 (TOKUYAMA SODA CO. LTD) 11.November 1985
- CHEMICAL ABSTRACTS, vol. 113, no. 16, 15.Oktober 1990 Columbus, Ohio, US; abstract no. 137547e, XP000184952 & STROIT. MATER., Nr. 4, 1990, Seiten 10-12, P.GEDEONOV ET AL.:

## Beschreibung

Die vorliegende Erfindung bezieht sich auf einen Isoliermörtel, der einsetzbar ist für Boden- und Dachfüllungen mit hohen isolierenden Eigenschaften sowohl thermisch als auch akustisch.

Die Erfindung findet ihre wichtigste Anwendung in der Bauindustrie, sie eignet sich für die Überdeckung von Betonschichten und als ausfüllendes Betonmaterial in verschiedenartigen Gebäuden.

Aus CA, 104, Nr. 6, Auszug 1986, Nr. 38842e ist eine Mörtelmischung bekannt, die unter Berücksichtigung des Maximalwertes für Polyurethan und der Minimalwerte für die anderen Stoffe folgende Zusammensetzung der wesentlichen Bestandteile aufweist: 1 Volumenteil Zement, 3 Volumenteile Polyurethan und 1 Volumenteil feine Zuschläge. Das beschriebene Ausführungsbeispiel führt zu einem PU-Anteil von etwa 37 Vol%. Es ist ein Wärmeleitwert angegeben, der etwa 0,42 W/m°K beträgt.

Aus DE-A-24 12 919 ist eine Trockenmischung zur Herstellung von Putzmörteln bekannt, die neben PU-Granulaten noch soviel Zement, Kieselsäuremehl und Bims enthält, daß der PU-Anteil etwa zwischen 50 und 80 Vol% liegen sollte. Dieser letzte Wert ist aber ein absoluter Grenzwert, denn ein Putzmörtel mit diesem Polyurethananteil ist wohl nicht mehr als Bewurf für Gebäudefassaden geeignet.

CA, 116, Nr. 26, Auszug 1992, Nr. 261179n lehrt eine Mörtelmischung zur Herstellung wärmedämmender Bauteile, die einen Anteil von 30 % an Abfall PU-Schaum aufweist.

Aus dem Dokument WO-91 04 291 ist eine Zusammenstellung bekannt, die als Decklage bestimmt ist, sie besteht aus einem Gemisch von Phenolharz und Zement. Ein Esterkatalysator beschleunigt die Reaktion zwischen den beiden Komponenten. Das Gemisch ist als Füllstoff, festes Material und als Bewehrungsteil einsetzbar.

Weiter ist aus dem Dokument EP-A-0 219 579 ein Isolationsmaterial auf der Basis von Zement und Vermiculite bekannt. Dieses Produkt hat eine erhöhte Druckfestigkeit und Widerstand gegen Druckkräfte. Es kann für die Herstellung von vorgefertigten Panelen eingesetzt werden.

Beide Dokumente betreffen ein Isoliermaterial mit hohen isolierenden Eigenschaften, sowohl thermisch als akustisch, dieses Material läßt es jedoch nicht zu, Abfallprodukte zu recyceln.

Die vorliegende Erfindung hat es sich zur Aufgabe gemacht, einen in großen Mengen vorkommenden Abfallstoff in ein wertvolles Produkt zu verarbeiten. Diese Aufgabe wird gelöst durch den Isolationsmörtel nach Anspruch 1.

Der Isolationsmörtel nach der Erfindung besitzt viel höhere thermische Isolationswerte als die bestehenden Mörtel, typisch wird erreicht:

lambda = 0,05 W/m°K.

Wenn man den Zementzuschlag erhöht, kann man die Druckfestigkeit erhöhen und die Isolationswerte verändern.

Als Grundstoff dient wiederaufbereitetes Polyurethan, das aus verschiedenen industriellen Branchen kommt. Einige Beispiele hierfür sind Stoßstangen von Autos, isolierende Dachpanele, Kühlschränke, Tiefkühlschränke, Boiler und andere Abfallprodukte, die Hart-Polyurethan (hartes PUR) aufweisen.

Dieses harte Polyurethan wird in ein Gemisch von Stücken und feinem Granulat mit einer Korngröße < 8 mm vermahlen und miteinander vermischt, um ein konstantes Volumen zu bekommen, weil die angelieferten Materialien unterschiedliche Dichte im Bereich von 35 $kg/m^3$ bis mehr als 200 $kg/m^3$ aufweisen.

Nach sehr sorgfältigen Durchmischungen werden Zuschlagstoffe zugegeben wie Zement, hydraulischer Kalk und Farbstoffe, sodaß man eine trockene Mörtelmischung erhält, die unter Zugabe von Wasser aushärtet. Die Trockenmischung wird in Papier- oder Plastiksäcken abgepackt. Es muß nur Wasser zugeführt werden. Man kann aber auch die Mischung erst am Einsatzort erstellen.

Der erfindungsgemäße Mörtel besteht zu mind. 70 %, vorzugsweise zu mind. 80 % aus zerkleinertem und damit wiederaufbereitetem, geschäumtem Hart-polyurethan, der Rest ist Zement, ggf. werden auch Zuschlagsstoffe, insbesondere ein Farbstoff, hinzugefügt. Die Menge an Zement wird so gewählt, daß zumindest eine ausreichende oder aber auch verstärkte Abbindung erreicht wird. Demgemäß kann die Zugabe an Zement nicht unter einen gewissen Wert absinken, der im wesentlichen davon abhängt, welche Gesamtoberfläche das zerkleinerte Polyurethan hat.

Auf die Stückgröße des Polyurethans kommt es nicht entscheidend an, es hat sich aber gezeigt, daß Stücke unter 20 mm, vorzugsweise unter 8 mm sich günstig verarbeiten lassen. Beim Zerkleinern fällt auch immer Staub an. Der Staubanteil bewirkt, daß sonst anfallende Hohlräume zwischen Körnen gefüllt werden. Der Staub erhöht die Gesamtoberfläche merklich, bei zu großen Staubanteilen muß mehr Zement zugegeben werden.

Als sehr vorteilhaft hat es sich gezeigt, der Grundmischung einen Entschäumer beizufügen. Hierfür werden leichte Säuren oder saure Salze verwendet, sie haben die Aufgabe, die beim Mischen auftretenden Blasen zu zerstören. Eine Zugabe unter 3 %, vorzugsweise unter 1 % des Gewichts der Gesamtmischung ist normalerweise ausreichend.

Vorteilhaft hat sich auch der Einsatz von Netzmitteln gezeigt, hierfür werden üblicherweise Phosphate eingesetzt. Eine Zugabe von unter 1 % hat sich als geeignet gezeigt.

Bevorzugt ist auch der Zusatz eines Verflüssigers, hierfür werden beispielsweise Melaminharze, Naphtalene, Sulfitablauge, beispielsweise getrocknete Sulfitablauge, eingesetzt. Auch die Zugabe des Verflüssigers kann unter ein Gewichtsprozent der gesamten Mischung bleiben.

Schließlich können noch Verzögerer oder Beschleuniger für die Abbindung des Zementes zugegeben werden, derartige Zusatzstoffe sind bei Beton allgemein bekannt, entsprechende Zusatzstoffe eignen sich auch für den Isolationsmörtel.

Als besonders bevorzugt hat sich der Zusatz von Farbpigment erwiesen, weil dadurch der Mörtelmischung eine gleichmäßige Farbgebung vermittelt wird. Besonders eignen sich als Farbpigment Eisenoxyd, also $Fe_2O_3$, das pulverförmig, mit der max. Korngröße von 2 Mikrometer, vorliegt. Es wird soviel zugegeben, daß eine ausreichende Färbung erreicht wird.

Es ist möglich, den Isolationsmörtel zu bewehren, für die Bewehrung eignen sich Matten, insbesondere Kunststoffmatten, weiterhin stückiges Material, wie stückige Kuststoffabschnitte und dergleichen.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:

FIG. 1: Eine schnittbildlich ausgeführte Ansicht eines Aufbaus eines Fußbodens und

FIG. 2: Eine ebenfalls schnittbildlich ausgeführte Ansicht eines Dachaufbaus, einmal mit einer Schräge, einmal in ebener Ausführung.

Auf eine Betondecke 20, die eine Mauer 22 trägt, ist eine Lage 24 des erfindungsgemäßen Isolationsmörtels aufgebracht. Zuvor sind die notwendigen Leitungen, hier symbolisiert durch ein Rohr 26, auf die Betondecke 20 aufgelegt und danach durch den Isolationsmörtel überdeckt worden. Üblicherweise wird eine Mindestdicke der Lage 24 von 3 cm eingehalten, typischerweise liegen die Dicken zwischen 5 und 10 cm.

Für den Isolationsmörtel wird eine Mischung von Polyurethan-Körnern und -abschnitten verwendet, die zu 30 bis 40 Gewichtsprozent aus feinem Staub mit Körnerdurchmesser unter 0,1 mm liegt. 10 % hat Körner mit Größenabmessungen von mehr als 2 mm.

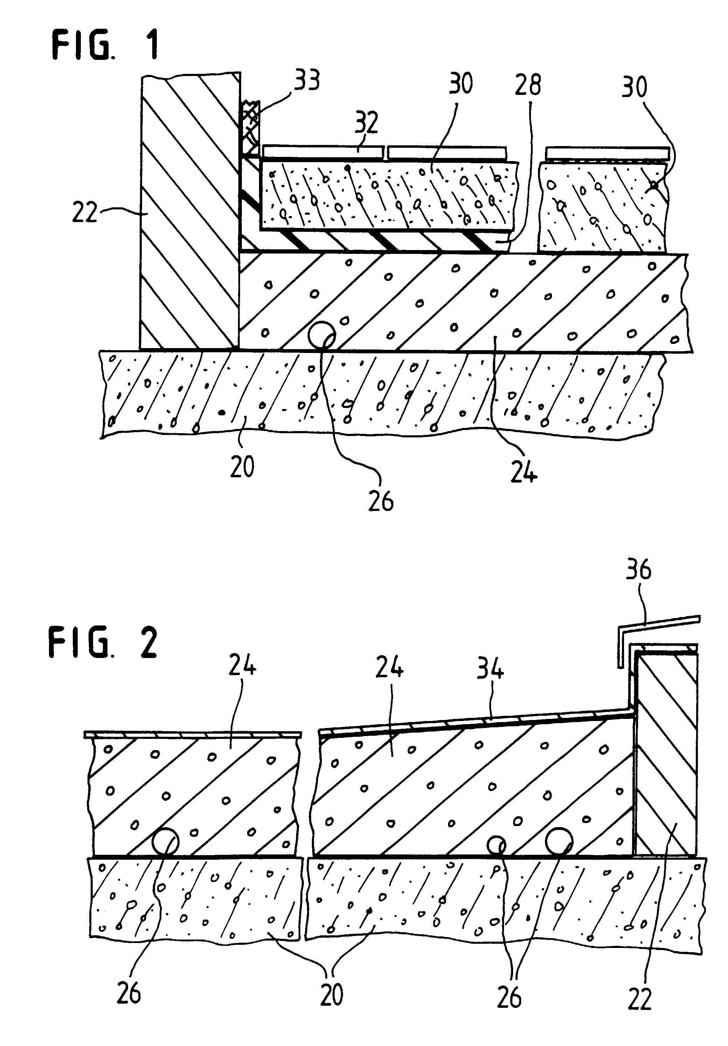

Die Lage 24 stößt seitlich unmittelbar gegen die Mauer 22. Auf der Lage 24 befindet sich in der linken Ausführung der Figur 1 eine Isolierschicht 28, wie sie üblicherweise zur Trittschalldämmung eingesetzt wird und häufig vorgeschrieben ist. Auf eine derartige Schicht 28 kann allerdings verzichtet werden, wie der rechte Teil der Figur 1 zeigt, wo eine derartige Schicht 28 nicht vorgesehen ist. Durch die Lage 24 wird eine ausreichende Trittschalldämmung erreicht.

Oberhalb der Schicht 28, im rechten Teilbild aber unmittelbar auf der Schicht 24 befindet sich eine Lage Estrich 30. Sie ist leicht bewehrt und hat typischerweise eine Stärke von 5 cm. Auf ihr befindet sich der eigentliche Fußbodenbelag, der hier durch Fliesen 32 dargestellt ist. Gegenüber der Mauer 22 ist der Estrich 30 in bekannter Weise beabstandet, entweder durch die Lage 28 oder durch hochgezogenes Material des Isoliermörtels. Eine Fußbodenleiste 33 ist vorgesehen.

Typischerweise wird der Isoliermörtel nach dem Auftragen verdichtet, beispielsweise durch leichtes Stampfen mit einem flächigem Werkzeug. Hier eignen sich flache Bretter, beispielsweise mit 1/4 bis 1/2 qm Fläche, die mit einem Stiel verbunden sind, über den Stiel wird die Platte auf die lose Schüttung des Mörtels gedrückt und auf diese Weise kompaktiert, aber auch egalisiert. Andere Verdichtungsverfahren sind möglich.

Im Ausführungsbeispiel nach Figur 2 ist der Aufbau eines Flachdaches, im rechten Teil mit Neigung, im linken ohne Neigung, gezeigt. Auf die tragende Betondecke 20 ist unmittelbar eine Lage 24 des Isoliermörtels aufgebracht, im rechten Teilbild ist der Auftrag so durchgeführt, daß nach dem Andrücken eine Schräge entsteht, im linken Teilbild dagegen eine waagerechte ebene Fläche. Wiederum ist es möglich, Rohrleitungen oder dergleichen 26 vorzusehen. Oben ist die Lage 24 unmittelbar durch eine Abdichtung 34 überdeckt, die die Wasserdichtigkeit sichert. Rechts ist das Flachdach durch eine kleine Mauer 22 abgeschlossen, sie wird in bekannter Weise von einem Schutzprofil 36 übergriffen.

**Beispiel:**

Um 50 l netto einsatzfähigen Mörtel zu bekommen, nimmt man einen Sack Trockenmischung nach der Erfindung mit einem Inhalt von ungefähr 76 l und einem Gewicht von ungefähr 23 kg und vermischt unter Zufügen von Wasser, während etwa einer Minute in einem Zwangsmischer vom Typ STOW oder HST. Man kann auch einen Betonmischer, einen einfachen Mischer, eine Putzmaschine vom Typ Estromat (eingetragenes Warenzeichen) oder eine Estrichmaschine vom Typ PFT einsetzen.

Mit einem Sack von 76 l Trockenmörtel kann man 1 m² Untergrund bedecken mit einer Lage Isolationsmörtel von 5 cm Dicke. Das spezifische Gewicht liegt bei ungefähr 450 kg/m³. Der Druckwiderstand liegt bei mindestens 2 kg/m².

Das Isolationsmittel nach der Erfindung kann auch eingesetzt werden bei Herstellung von Isolationsplatten, Isolationspanelen bestimmt für den Einsatz in Trennwänden und/oder für Bausteine.

**Patentansprüche**

1. Isolationsmörtel für Boden- und Dachfüllungen mit hohen isolierenden Eigenschaften sowohl thermisch als auch akustisch, bestehend aus einer Trockenmischung von Zement und Füllstoffen, die einsatzfertig vorbereitet ist für die Zumischung von Wasser, dadurch gekennzeichnet, daß sie hergestellt wird aus:

90 - 94 vol. % wiederaufbereitetem Hartpolyurethan, das zerkleinert ist zu einer Mischung von Pulver und Granulat mit einer Korngröße kleiner 8 mm und

6 - 10 vol. % Zement, insbesondere

92 vol. % wiederaufbereitetes Hart-Polyurethan und 8 vol. % Zement.

2. Isolationsmörtel nach Anspruch 1, dadurch gekennzeichnet, daß die Mischung zusätzlich gelöschten oder hydraulischen Kalk und/oder Farbstoffe insbesondere pulverisiertes Eisenoxyd, enthält.

3. Isolationsmörtel nach einem der vorangegangenen Ansprüche, dadurch gekennzeichnet, daß er ein spezifisches Gewicht von ungefähr 300 bis 450 kg/m³, insbesondere 400 kg/m³ aufweist.

4. Isolationsmörtel nach einem der vorangegangenen Ansprüche, dadurch gekennzeichnet, daß er als Zusatzstoff einen Entschäumer, insbesondere eine schwache Säure oder ein saures Salz, aufweist.

5. Isolationsmörtel nach einem der vorangegangenen Ansprüche, dadurch gekennzeichnet, daß er als Zusatzstoff ein Netzmittel, insbesondere ein Phosphat, aufweist.

6. Isolationsmörtel nach einem der vorangegangenen Ansprüche, dadurch gekennzeichnet, daß er als Zuschlagstoff einen Verflüssiger, beispielsweise ein Melaminharz, aufweist.

7. Isolationsmörtel nach einem der vorangegangenen Ansprüche, dadurch gekennzeichnet, daß er als Zuschlagstoff ein Mittel, das ihm thixotrope Eigenschaften verleiht, enthält, insbesondere ein Klebmittel, beispielsweise Tapetenkleister, z. B. Methylzellulose.

8. Isolationsmörtel nach einem der vorangegangenen Ansprüche, dadurch gekennzeichnet, daß sein Isolationswert typischerweise beträgt:

lambda = 0,05 W/m°K.

9. Verfahren zur Herstellung eines Bauelementes unter Verwendung eines Isolationsmörtels nach einem der vorangegangenen Ansprüche, dadurch gekennzeichnet, daß der Isolationsmörtel flächig ausgebreitet oder in eine Form gefüllt wird und anschließend verdichtet, insbesondere durch Stampfen verdichtet wird.

## Claims

1. Insulating mortar for floor- and roof fillings with high insulating qualities, thermal as well as acoustic, consisting of a dry mixture of cement and filling material, prepared ready to use under the addition of water, characterized by the fact that it is produced from:

90-94 vol. % recycled solid polyurethane, ground into a mixture of powder and granulate with a granule size smaller than 8 mm and

6-10 vol. % cement, specifically

92 vol. % recycled solid polyurethane and 8 vol. % cement.

2. Insulating mortar according to claim 1, characterized by the fact that the mixture furthermore contains slaked or hydraulic lime and/or pigments, especially pulverized iron oxide.

3. Insulating mortar according to one of the preceding claims, characterized by a specific weight of about 300 to 450 kg/m³, specially 400 kg/m³.

4. Insulating mortar according to one of the preceding claims, characterized by the fact that it contains an antifoaming agent as an additive, especially a diluted acid or an acidic salt.

5. Insulating mortar according to one of the preceding claims, characterized by the fact that it contains a surface-active agent as an additive, especially a phosphate.

6. Insulating mortar according to one of the preceding claims, characterized by the fact that it contains a liquefier as an additive especially a melamine resin.

7. Insulating mortar according to one of the preceding claims, characterized by the fact that it contains a means for providing it with thixotrope performance as an additive, especially an adhesive, e.g. wallpaper glue, for instance methyl cellulose.

8. Insulating mortar according to one of the preceding claims, characterized by that the insulating value typically amounts to lambda = 0,05 W/m°K.

9. Method for producing a building element by using an insulating mortar according to one of the preceding claims, characterized by the fact that the mortar is distributed on an area or filled into a mold and is compressed thereafter, especially compressed by stamping.

## Revendications

1. Mortier isolant de nivellement de sols et toitures présentant des caractéristiques isolantes importantes aussi bien thermiques qu'acoustiques, se présentant sous la forme d'un mélange sec de ciment et de matériaux additifs, prêt à l'emploi pour le mélange avec de l'eau, caractérisé par le fait qu'il est composé de :

   - 90-94% en volume de polyuréthane rigide recyclé qui est moulu en un mélange de poudre et granulés dont la grosseur est inférieure à 8mm ;
   - 6-10% en volume de ciment ;
   - en particulier 92% en volume de polyuréthane rigide recyclé et 8% en volume de ciment.

2. Mortier isolant selon la revendication 1, caractérisé par le fait qu'il contient de la chaux hydraulique ou de la chaux éteinte et/ou des colorants, en particulier de l'oxyde de fer en poudre.

3. Mortier isolant selon une des revendications précédentes, caractérisé par le fait que le mortier possède un poids spécifique d'environ 300 à 450 Kg/m$^3$, en particulier 400 Kg/m$^3$.

4. Mortier isolant selon une des revendications précédentes, caractérisé par le fait que le mortier contient comme additif un agent anti-moussant, en particulier un acide léger ou sel acide.

5. Mortier isolant selon une des revendications précédentes, caractérisé par le fait que le mortier contient comme additif un agent mouillant, par exemple un phosphate.

6. Mortier isolant selon une des revendications précédentes, caractérisé par le fait que le mortier contient comme additif un agent condensateur, par exemple de la résine de mélamine.

7. Mortier isolant selon une des revendications précédentes, caractérisé par le fait que le mortier contient comme additif un agent lui donnant des qualités thixotropes, en particulier un agent liant, en particulier de la colle de tapisserie, par exemple, du methylcellulose.

8. Mortier isolant selon une des revendications précédentes, caractérisé par le fait que sa valeur isolante s'élève en particulier à 0,05 W/mK (coefficient lambda).

9. Procédé de fabrication de matériaux de construction sous la forme d'un mortier isolant tel que mentionné dans une des exigences précédentes, caractérisé par le fait que le mortier est répandu à plat ou versé dans une forme et est ensuite comprimé, en particulier en le damant.

## FIG. 1

## FIG. 2